# EUROPEAN PATENT SPECIFICATION

(11) **EP 3 879 188 B1**
(45) Date of publication and mention of the grant of the patent: **27.03.2024**
(21) Application number: 21158978.3
(22) Date of filing: 24.02.2021
(51) Int. Cl.: F24D 19/00

(54) **VENTILATION DEVICE FOR PLACEMENT BEHIND A CENTRALLY CONNECTED RADIATOR**
LÜFTUNGSVORRICHTUNG ZUR PLATZIERUNG HINTER EINEM ZENTRAL ANGESCHLOSSENEN HEIZKÖRPER
DISPOSITIF DE VENTILATION POUR UNE MISE EN PLACE DERRIÈRE UN RADIATEUR CENTRALEMENT CONNECTÉ

(30) Priority: 10.03.2020 SE 2050265
(43) Date of publication of application: 15.09.2021
(73) Proprietor: Purmo Group Sweden AB, 285 21 Markaryd (SE)
(72) Inventor: THORN, Håkan, 570 15 Holsbybrunn (SE)
(74) Representative: Bergenstråhle & Partners AB

(56) References cited:
- EP-A2- 2 431 673
- WO-A1-95/30862
- DE-U1- 20 021 244

## Description

### Technical field

The present invention relates to a ventilation device for placement behind a centrally connected radiator arranged at a wall. The ventilation device is arranged to direct an outdoor air stream from an outdoor air opening in the wall towards an underside of a radiator, wherein the outdoor air stream being led up by means of the ventilation device through or along the radiator, for heating the outdoor air stream before it flows into the room where the radiator is located.

### Technical background

For a long time, different types of ventilation devices / supply air devices placed behind side-connected radiators have been used to preheat inflowing outdoor air, usually in connection with some form of exhaust air ventilation. The exhaust air ventilation can be mechanical, i.e., be a fan that sucks out air from a house or a room, or alternatively be in the form of natural ventilation by natural draft. In both these types, it is common to have some form of outdoor air valve, often in connection with windows and in some cases in connection with radiators. One simple solution for providing outdoor air to an underside of a radiator is described in EP 2 431 673 A2, which comprises a ventilation device arranged below a radiator, where the ventilation device is a closed air duct, which guides air from an opening in a wall to an underside of the radiator. The device comprises a first ejector part and a second ejector part, which is movable inside the first part from a closed to an open position and vice versa and a shut-off valve. The second ejector part directs air upwards towards the underside of the radiator in the open position to heat outdoor air which passes the radiator. The second ejector part is further lockable to the first ejector part via a screw arranged in a slot, arranged at the bottom of the first ejector part, and when moving the second ejector part in direction towards the wall, the shut-off valve closes and stops the outdoor airflow. In connection with mechanical exhaust air ventilation, it is common that an outdoor air stream is led into the room from an outdoor air opening (valve) in the wall, and via a ventilation device located behind a radiator, and further in direction towards an underside of the radiator, wherein the outdoor air stream being led through or along the radiator, for preheating the outdoor air stream before it flows into the room where the radiator is located. There are mainly two types of such ventilation devices, of which in one type, the ventilation device is a closed air duct which is connected between an outdoor air opening in the wall and an underside of a radiator. One example of such a solution is found in the Swedish granted patent SE 527 534 C2, where a supply air device consists of an upper part in the form of a filter box, an intermediate part in the form of a flexible duct connected to the upper part and further connected to a lower part, which lower part is arranged with an angled ejector part for the purpose of releasing the air towards the radiator in an upward direction. The second type is not designed as a closed air duct but instead forms a closed duct by that constituent components of the supply air device together with the back wall and the back of the radiator forming an air duct. Such a solution is presented in the European patent application EP 3 222 928 A1, where two side pieces / brackets, on which the radiator is arranged, seal between the wall and radiator. Furthermore, there is a top piece that seals against the wall at its rear edge and along the upper edge of the side pieces, and further a bottom piece, in the form of an ejector part, which in the same way seals against the wall and against the bottom edge of the side pieces. A filter unit is further arranged in the supply air device so as to be slid in from an upper side, in front of the top piece. In the same way as in the Swedish patent described above, the ejector part is angled and arranged to let the air out towards the radiator in one direction and upwards towards the underside of a radiator. The ejector part is in this case divided into two parts where a fixed part is arranged closest to the wall and a movable part is movably arranged in relation to the fixed part. The movable part makes the device openable to enable cleaning of the supply air device from the underside. One similar solution is presented in DE 20021244 U1, which presents a solution which is similar to the one in EP 3 222 928 A1, but which solution further presents a function of pivoting the complete side-coupled radiator. A complete other solution is presented in WO 95/30862 A1, which disclose a radiator and a ventilation device, where the radiator is integrated inside the ventilation device. The ventilation device is designed to lead airflow from on opening in a wall to the underside of the radiator and further out from the ventilation device after the air has passed the radiator. Further, the ventilations device comprises a fan. All solutions known on the market work for so-called side-connected radiators, i.e., radiators where the radiator pipes are located on one side of the radiator. A problem with side-connected radiators is that the location of the pipes on the side of the radiator determines the location of the connecting pipes, that is the pipes which are to be connected to the radiator, and which in many cases are located into the floor joist, and of course then must exit through the floor in the correct position. As the size of the radiator is determined by the power it is to deliver, the location of the connecting pipes is affected by the radiator size, mainly depending on the width of the radiator. By width is meant the extension direction along the wall, for example under a window with a certain width. When producing prefabricated single-family houses and villas, but also for other prefabricated larger houses, it is often not known what radiator size will be needed, because this is depending on where/ in which climate the house will be placed, etc. whereby the power requirement may vary. As a result, production has recently been directed towards so-called centrally connected radiators (center-connected), where the location of the radiator and thus the connecting pipes, which, as told, often are located in the floor joists, always becomes central under a window. Of course, this means great advantages as the piping positioning can be standardized. Known solutions regarding supply air devices for placement behind the radiator cannot be used with this type of centrally connected radiators, therefore a need has arisen to provide such a solution.

### Summary of the invention

One object of the present invention is to provide a ventilation device which solves the above-described problems, which are solved by a ventilation device according to the independent claim 1.

Such a ventilation device enables radiator pipes drawn in the floor joist or along the floor to extend upwards in a central position under a window in a house construction, without that this prevents the use of a ventilation device for preheating outdoor air led to the underside of a radiator. Furthermore, in that the ejector part consists of a first and a second ejector part which are removably connected to each other, the ventilation device can also be opened for access from below, for example for cleaning, by removing the second ejector part from the first ejector part. The ventilation device thus directs outdoor air from an opening in the wall to the underside of a radiator and since the device is closed upwards, sideways, and downwards through the top piece, the side pieces and the ejector parts, except at the radiator pipes where the opening is located in at least one of the ejector parts, the air will be led up through the radiator. If necessary, the opening at the radiator pipes can be made "tight" in relation to the pipe dimension if these are known, to minimize any air leakage through the opening, but the main air stream is led via the ejector parts towards the underside of the radiator, so any leakage is minimal. There are no known solutions of corresponding ventilation devices that can be used with centrally connected radiators.

According to the first alternative in claim 1, the respective side piece is arranged to connect to the wall and to a rearside of the radiator, and the at least one top piece is further arranged to connect to the wall, and the first ejector part is further arranged to connect to the wall. Such a ventilation device thus uses the wall and the back of the radiator to form the air duct through which the outdoor air is led towards the underside of the radiator. Thus, there is a freedom in how an outdoor air opening in the wall connects to the ventilation device, since the ventilation device thus may be completely open at the wall side, since other parts connect to the wall, whereby no back piece is needed. The outdoor air opening which opens into the rear edge of the ventilation device can be in the form of, for example, an opening or a duct connection. By using the wall and the back of the radiator as "duct parts", material is saved, which provides a cost-effective solution.

According to the second alternative in claim 1, the ventilation device instead comprises a rear wall and a front wall which together with the side pieces, the top piece and the first ejector part form an air duct for directing an outdoor air stream from an opening in the wall to the underside of the radiator. This instead creates a closed channel for those cases where it is wanted.

According to one embodiment, the ventilation device comprises at least a first seal, which is arranged at least at one of the first and the second ejector parts. The first seal is arranged to prevent air flow in / out of the ventilation device through the opening in the bottom part, wherein the first seal comprises at least one slot or a hole, wherein the slot / hole is arranged to allow passage of radiator pipes through the first seal, and wherein the first the seal further is arranged to seal around radiator pipes extending through the seal. Such a solution eliminates the risk of cold outdoor air leaking out of the ventilation device around the pipes and flowing out along the floor surface, whereby instead the cold outdoor air is safely led upwards and further through the radiator. If the pipe dimensions are known, the first seal may comprise holes adapted to the size and position of the pipes. To instead let the seal include a slot, there is a freedom in relation to pipe dimension and location (cc dimensions). In both cases, the seal is arranged to seal around the pipes to prevent air leakage through the opening. As stated, the seal may be a seal fitted at one ejector part, but may also be two seals, one on each ejector part, which together or separately contribute to the seal around the pipes, when the second ejector part is connected to the first ejector part. The second ejector part is connected to the first ejector part so that the pipes end up between the ejector parts or in the first ejector part, since the second ejector part must be able to be removed from the first ejector part, wherein it must be arranged on the "room side" of the radiator pipes.

According to a preferred embodiment, the first ejector part and the second ejector part comprise downwardly projecting wall parts, arranged such as the wall parts together form an enclosure around the opening when the first ejector part and the second ejector part are connected to each other, wherein the enclosure is arranged to cover radiator pipes protruding from a floor side. For example, the first ejector part may comprise a first downwardly directed wall part on a side which is arranged between the protruding pipes and the wall, and preferably two other wall parts which are directed towards the room. Correspondingly, the second ejector part comprises a downwardly directed first wall part on the opposite side of the pipes in relation to the first wall part of the first ejector part, i.e., on the "room side" of the pipes, and further two second wall parts which are directed towards the wall. These wall parts together form an enclosure which not only forms walls around the opening but also forms a pipe lining between the floor and the ejector parts. In this way, both the function of providing the possibility of a central pipe extension through a ventilation device of this kind and the function of providing a pipe lining are obtained, which is aesthetically pleasing. When the two ejector parts are connected to each other with their wall parts, an enclosure of the pipes is formed, and where the second ejector part / the lining which faces the room is also demountable for cleaning the interior of the ventilation device.

According to a preferred embodiment, wherein the first seal is arrangeable in the enclosure and has a width which substantially corresponds to internal dimensions of the enclosure, wherein the first seal is arranged to be threaded over radiator pipes protruding from the floor and thereby further arranged to position the ejector parts and thus the ventilation device relative to radiator pipes protruding from a floor side. This embodiment has a number of advantages. By the first seal being applicable on the radiator pipes protruding in a central position below a window in a building, and that the dimensions of the seal substantially corresponds to the inner dimensions of the enclosure, a positioning of the enclosure and thereby the entire ventilation device in a central position below the window is achieved at the same time as the first seal prevent air leakage via the opening and the enclosure to the room.

According to a preferred embodiment, the first seal is arrangeable in the enclosure at a first distance from the bottom parts and that at least one of the downwardly projecting wall parts comprises a drainage outlet arranged to discharge any leaking water from the radiator pipes out through the enclosure, which drainage outlet is arranged at a second distance from the bottom parts, which second distance is shorter than the first distance. It is common for heating pipes, such as radiator pipes placed in floor joists, to have an outer casing, which means that any leakage of a pipe is caught by the outer casing. When this casing is filled with leaking water, this is led out of the casing at the pipe coupling above the floor, for example as at the radiator connection. This connection is located inside the ventilation device or its enclosure around the pipes, whereby leakage water must be detected as quickly as possible. Therefore, a drainage outlet is arranged so that it is located on an upper side of the first seal, i.e., closer to the ejector parts and closer to the connection between the radiator and the connecting radiator pipes, whereby the leakage can be quickly detected.

According to one embodiment, each side piece comprises a second seal which is arranged between the upper end and the lower end of the side piece, on an inside which faces the other side piece, and which second seal has a width slightly wider than the width of the side piece, wherein the second seal is arranged to seal against a wall and the back of a radiator, respectively. This second seal provides an airtight connection to the wall and to the back of the radiator, as well as airtight seam at the side pieces in the event of any holes in the side pieces, which may be needed for manufacturing or other reasons. Thus, the ventilation device does not have to be a closed duct with a front piece and a back piece but can use the wall and the radiator as duct parts for material-saving purposes.

According to a preferred embodiment, the ventilation device further comprises a filter part arranged such as an outdoor air stream is filtered when it is led from a ventilation opening through the ventilation device in the direction of the underside of a radiator. Preferably, the filter part is replaceable or cleanable, why it is arranged to be insertable and extendable via a top side of the ventilation device and where its end position causes the entire outdoor air stream to pass the filter during its passage through the ventilation device.

According to one embodiment, the second ejector part is removably connected to the first ejector part in that at least one of the first and the second ejector part comprises locking tabs arranged to receive and retain corresponding bottom parts and / or wall parts of the first and the second ejector part. Preferably, the ejector parts as well as the top piece and the side pieces are made of sheet metal / bent sheet metal, and a simple solution is that the locking tabs are arranged on some of the ejector parts, wherein when the second ejector part is connected to the first ejector part, the bottom parts and / or wall parts slide into or under the locking tabs wherein the parts are connected to each other. In addition, it is also easy to disassemble the parts from each other. Of course, it is also conceivable for the ejector parts to be screwed together or locked in other ways.

According to an embodiment of the invention, each side piece comprises an upper support part arranged at the upper end of the side piece, which upper support part is arranged to support / hold an upper part of a radiator. Furthermore, each side piece comprises a lower support part, which is arranged at the lower end of the side piece and which is arranged to support a lower part of a radiator. It is an advantage if the side pieces are arranged to support a radiator because then both the ventilation device and the radiator are controlled to their position in relation to the radiator pipes which are to centrally connect the radiator.

According to an embodiment of the invention, at least the first bottom part of the first ejector part and the second bottom part of the second ejector part are arranged below the lower support part of the side pieces.

### Short description of the figures

The invention will now be described, by way of example, with reference to the accompanying figures in which:
Fig. 1 shows a principal side view of a room with mechanical exhaust air ventilation and an inlet opening for outdoor air, and where a ventilation device according to the invention is arranged between a radiator and an outer wall. The radiator is a so-called centrally connected radiator.
Fig. 2a shows a side view of a ventilation device according to the invention which is mounted in connection with an outdoor air duct, between an outer wall and a radiator. Fig. 2b shows a section through the ventilation device but without the radiator.
Fig. 3a-c shows the ventilation device according to the invention in a front view, i.e. from the room side and a side view thereof. Fig. 3a shows the ventilation device when arranged in connection with upwardly projecting radiator pipes, which are to be connected to a centrally connected radiator, while Fig. 3b-c show the ventilation device seen from the room side, when an enclosure hides the radiator pipes.
Fig. 4a-e shows views of a lower part of the ventilation device and included details in an enclosure / lining (cladding) and schematically show how it is mounted to the ventilation device to partly hide the radiator pipes and direct an outdoor air flow upwards, up towards a radiator.
Fig. 5a-d shows an alternative and simpler embodiment of a lower part of the ventilation device, which allows pipe penetration through the bottom of the ventilation device but where an enclosure for hiding the radiator pipes is missing.

### Description of embodiments

In the following, a detailed description of a preferred embodiment of a ventilation device according to the invention is described with reference to the accompanying figures. The invention is not limited to the figures but is defined in the appended claims.

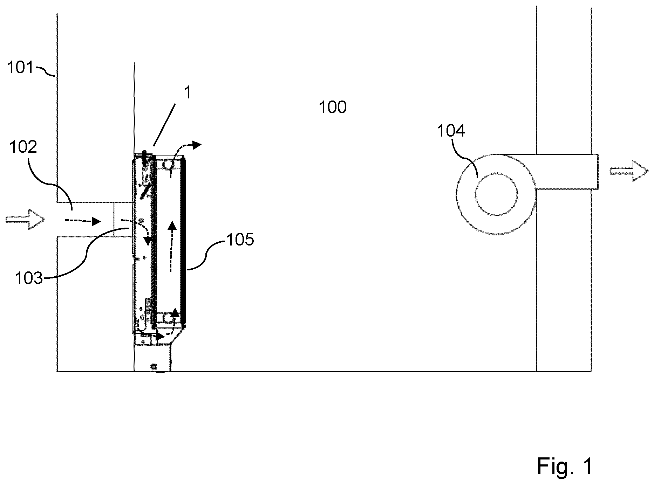

Fig. 1 shows a principal side view of a room / a premises 100 with mechanical exhaust air ventilation via an exhaust air fan 104 arranged to evacuate room air from the room 100. Further, an outdoor air duct 102 is principally shown, which duct is arranged in an outer wall 101 and where the outdoor air duct 102 ends with an opening 103 which faces the room 100. A ventilation device 1 according to the invention is preferably fixedly mounted to the inside of the outer wall 101 and the opening 103 opens with its outlet at the backside of the ventilation device 1. By the fan 104 sucking air from the room 100, an outdoor air stream is simultaneously drawn in through the outdoor air duct 102 and flows in via the opening 103 into the ventilation device 1. The outdoor air stream is led downwards through the ventilation device 1 and further towards the underside of a radiator 105, where the air is led upwards through the radiator 105 for heating the outdoor air flow, before inflow to the room 100.

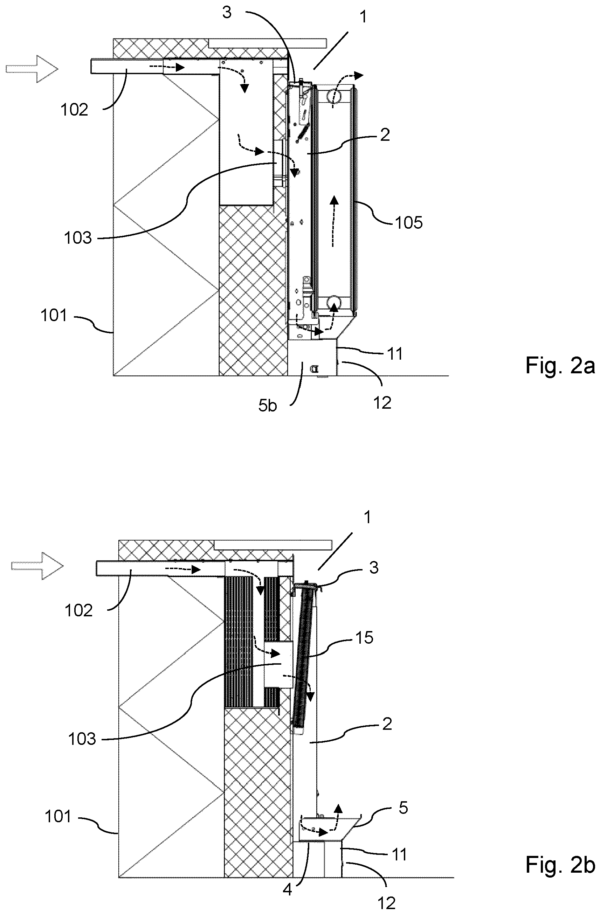

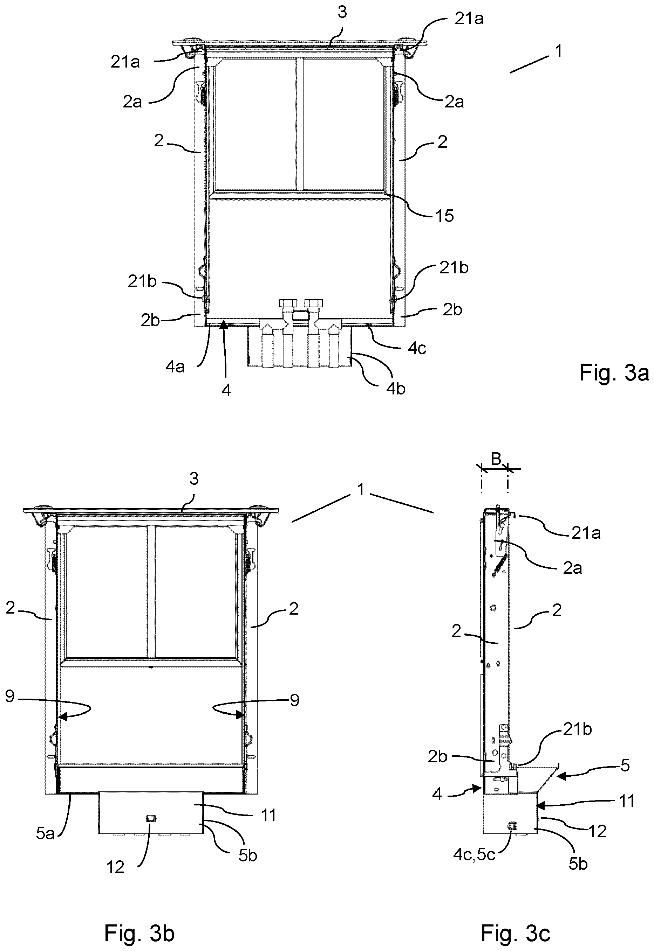

Fig. 2a shows a side view of the ventilation device 1, which is mounted towards the inside of the outer wall 101 and connected to the opening 103 of the outdoor air duct 102, between the outer wall 101 and the radiator 105, while Fig. 2b shows a section through the ventilation device 1 but without the radiator. The outdoor air stream is, as mentioned above, sucked in through the air duct 102 and is further passed on for outflow from the outdoor air duct 102 via the opening 103 into the ventilation device 1. The opening 103 may be a simple hole or preferably a connection socket, as shown in the figure. The air flow opens into the rear edge of the ventilation device 1, which in the preferred case does not comprise a back piece arranged against the wall, but instead uses the inside of the outer wall 101 as a rear duct wall. The ventilation device 1 forms a closed air duct by connecting two side pieces 2 airtight to both the inside of the wall 101 and to the back of the radiator 105 by means of a respective seal, which is explained below in connection with Fig. 3b, among others, and further the air duct closes at the top, through a top piece 3, which also seals against the inside of the outer wall 101 and against the side pieces 2, see also Figs. 3a-c. The outdoor air flow passes an inclined filter part 15 which comprises a filter which is replaceable in that it is insertable / extendable via the upper side of the ventilation device 1. If a connection socket is used in connection with the opening 103, it is preferred that a transverse disc (not visible) is connected to it at a short distance from the opening 103, but before the filter part 15, and preferably at a short distance from it. This is to distribute the outdoor air flow over a larger filter area to reduce local contamination of the filter at the area of the opening 103 and to delay the cleaning intervals of the filter.

In the lower part of the ventilation device 1, a first ejector part 4 is arranged between the side pieces 2, see further Figs. 3a-c, which first ejector part 4 is arranged to discharge the outdoor air stream flowing downwards through the ventilation device 1 towards the room and to an area below the radiator 105. Furthermore, a second ejector part 5 is removably connected to the first ejector part 4, which second ejector part 5 is arranged to direct the outdoor air flow upwards, so that it flows up through the radiator 105, where it is also heated. Furthermore, the first and the second ejector parts 4, 5 form an enclosure 11, which has the task of forming a lining between the ejector parts 4, 5 and a floor surface of the room, in order to hide radiator pipes protruding from the floor (not visible). On the front side of the enclosure 11 (room side) there is also a drainage outlet 12, the function of which is described in connection with Figs. 3a-c.

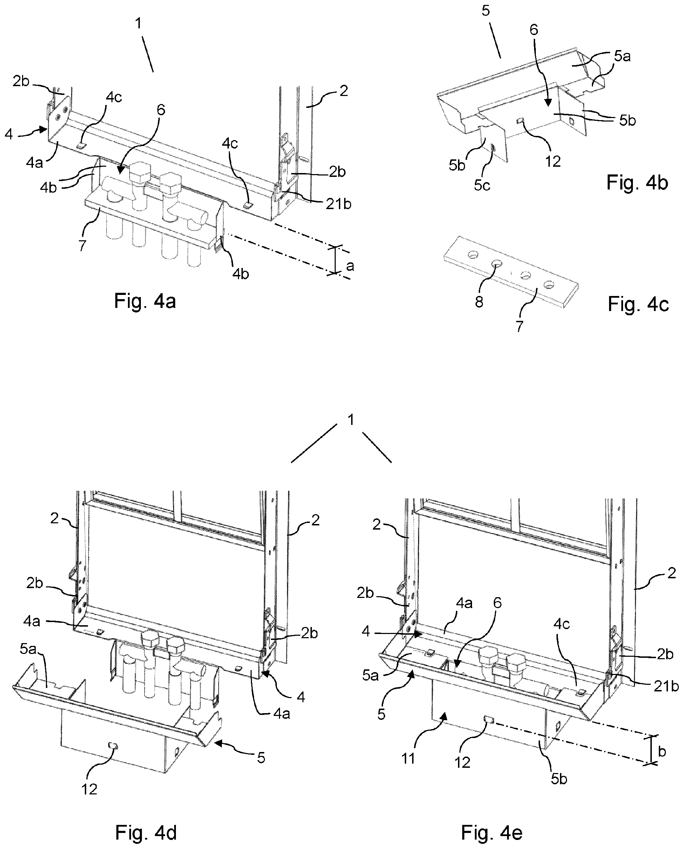

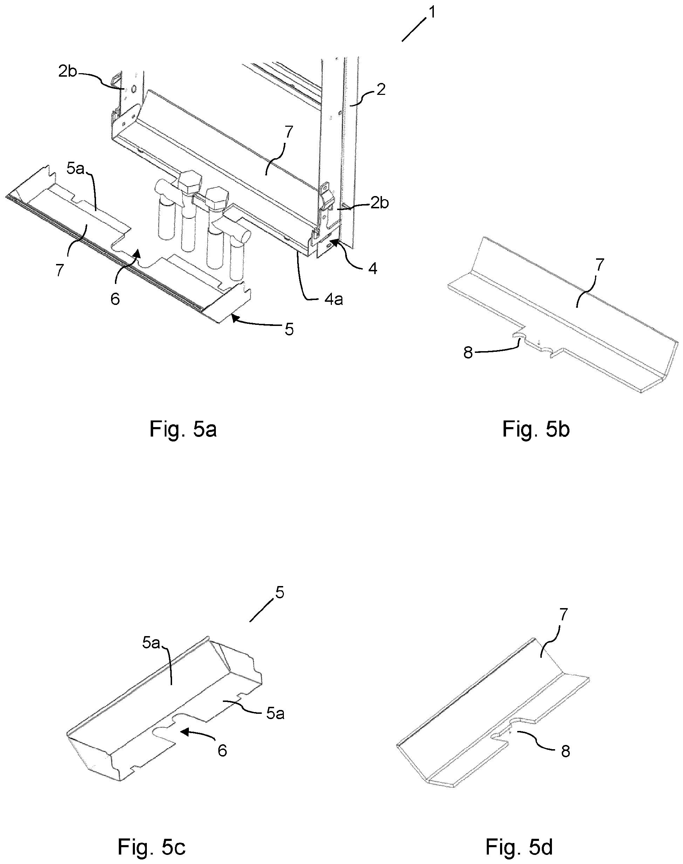

Fig. 3a-c show the ventilation device 1 in a front view (Fig. 3a-b), i.e., from the room side and in a side view (Fig. 3c). Fig. 3a shows the ventilation device 1 as it is arranged in connection with radiator pipes protruding from the floor side which pipes are to connect to a centrally connected radiator, while Fig. 3b-c show the ventilation device 1 when the enclosure 11 hides the radiator pipes. The ventilation device 1 consists of a frame-like construction and comprises as previously mentioned two vertical side pieces 2 with a width B, which are arranged at a distance from each other, the upper piece 3 which extends between the upper ends 2a of the side pieces 2, and further also the first ejector part 4 which is arranged between the side pieces 2 and in close connection with its lower ends 2b. The filter part 15 is also arranged in the upper part of the ventilation device 1 and between the side pieces 2, preferably tightly connected to them and angled as seen in Fig. 2b, wherein an upper end being close to the back of the radiator and a lower end being close to the inside of the outer wall, to ensure that the complete outdoor air stream is forced to pass the filter when passing downwards through the ventilation device 1. Each side piece 2 further comprises a second seal 9 arranged between the upper end 2a and the lower end 2b of the respective side piece 2, i.e., on an inside facing the opposite side piece 2. The second seal 9 has a width slightly wider than the width B of the side piece 2, wherein the respective second seal 9 is arranged to seal against a wall and a rear side of a radiator. The top piece 3 is also arranged to seal against the side pieces 2, preferably in that the second seal 9 of the side pieces 9 also seals between the top piece 3 and the side pieces 2. The top piece 3 preferably also comprises a seal between wall and top piece 4 whereby outdoor air which is led through the ventilation device 1 is prevented from passing out of the ventilation device 1 at the top piece 3. In the same way, the first ejector part 4 is also arranged to seal in a sealing manner against the side pieces 2 at its lower ends 2b and is arranged to seal between the first ejector part 4 and the wall through a first seal 7, see Figs. 4a-b and Figs. 5a-d . Thus, outdoor air led through the ventilation device 1 is prevented from passing out at the first ejector part 4. The first ejector part 4 comprises at least a first bottom part 4a, with the function to direct the outdoor air flow from the downwardly directed air flow direction through the ventilation device 1, substantially at right angles out from the wall, towards the area at the bottom of the radiator. In the same way, the second ejector part 5 comprises, at least a second bottom part 5a, with the function to direct the outdoor air flow, directed by means of the first ejector part 4, further upwards in the direction of the underside of the radiator.

As mentioned above, the ventilation device 1 is arranged to be used with a centrally connected radiator, which means that radiator pipes are to be connected to the radiator from the "floor side", which then, so to speak, infringe on at least one of the bottom parts 4a, 5a of the ejector parts 4, 5. Therefore, one or both of these comprise an opening 6 which allows the passage of radiator pipes through the one (s) of the bottom parts 4a, 5a which comprise the opening 6. Furthermore, according to the preferred embodiment, the first ejector part 4 and the second ejector part 5 comprise downwardly projecting wall parts 4b, 5b , which are arranged so that the wall parts 4b, 5b together form the enclosure 11 around the opening 6 and between the floor and the bottom parts 4a, 5a, when the first ejector part 4 and the second ejector part 5 are connected to each other, wherein the enclosure 11 covers the radiator pipes which protrudes from a floor side, between the underside of the radiator and the floor. The two ejector parts 4, 5 may be connected to each other by locking tabs 4c, 5c arranged to receive and retain corresponding bottom parts 4a, 5a and / or wall parts 4b, 5b of the first and the second ejector part 4, 5. See description of Figs. 4a-e and Fig. 5a-d below.

According to the preferred embodiment, the respective side piece 2 comprises an upper support part 21a at the upper end 2a of the respective side piece 2 and a lower support part 21b at the lower end 2b of each side piece 2. These support parts 21a, 21b are arranged to support the radiator, wherein the upper support part 21a is arranged to support / hold an upper part of a radiator and the lower support part 21b is arranged to support a lower part of a radiator. The first bottom part 4a of the first ejector part 4 and the second bottom part 5a of the second ejector part 5 are arranged below the lower support parts 21b of the side pieces 2.

Figs. 4a-e show views of a lower part of the ventilation device 1 as well as details of what forms the enclosure 11 and the first seal 7. Furthermore, it is shown schematically how the second ejector part 5 is mounted to the first ejector part 4 to partly hide the radiator pipes and direct an outdoor air stream upwards, up towards a radiator. Fig. 4a shows a lower part of the ventilation device 1 with the lower support parts 21b arranged at the respective lower end 2b of the side pieces 2. The first ejector part 4 is arranged between these ends 2b with its first bottom part 4a and side walls. The first bottom part 4a comprises two locking tabs 4c, which are visible on either side of the opening 6 in the first bottom part 4a. The side pieces 2, the ejector parts 4, 5 with their respective wall parts 4b, 5b are all made of bent sheet metal. From one edge of the opening 6 (closest to the wall in the using position) a rear wall part 4b is arranged, which has a respective, forwardly angled wall part 4b. The latter also each has a guide arranged for the locking tabs 5c of the second ejector part 5. The locking tabs 4c of the first ejector part 4 are arranged to receive the bottom part 5a of the second ejector part. In this way, the ejector parts 4, 5 may be connected to each other in a detachable manner. When cleaning the ventilation device 1, the second ejector part 5 is removed to access the inside of the ventilation device 1. Furthermore, Fig. 4a shows how the first seal 7, which is also shown in Fig. 4c, is mounted on / around radiator pipes which protrudes from the floor below the radiator (the radiator is not shown in the figures). This can be done either before the pipe parts are assembled by means of different pipe couplings, or if some form of slot is arranged in the first seal 7, in connection with a number of holes 8, which are arranged in the first seal 7 for pipe penetration and sealing around the pipes. The first seal 7 may be arranged in the enclosure 11 and has a width which substantially corresponds to the internal dimensions of the enclosure 11. Thus, the first seal 7 is also used to position the ejector parts 4, 5 and thus the ventilation device 1 relative to the radiator pipes. It is preferred that at least the one of the first ejector part 4 and the second ejector part 5 which comprises the opening 6 also comprises at least the first seal 7, this to prevent outflow of air from the ventilation device 1 at these parts and to seal against air flow through the opening 6 in bottom part (s) 4a, 5a. The respective ejector part 4, 5 may also comprise additional seals for, for example, condensation insulation. The first seal 7 may be arranged in the enclosure 11 at a first distance, a, from the bottom parts 4a, 5a, which is a position preferably quite close to the floor surface.

Fig. 4b shows the second ejector part 5 which comprises two second bottom parts 5a and side walls, wherein at least one is arranged to direct the outdoor air flow up towards the radiator. Furthermore, the downwardly projecting wall parts 5b are included in the form of a long side and two ends, of which the latter two comprise locking flaps 5c for coupling to the first ejector part 4. The second bottom part 5a further comprises guides in the form of recesses in position for corresponding locking tabs 4c of the first ejector part 4. Furthermore, at least one of the downwardly projecting wall parts 5b comprises a drainage outlet 12, which in the preferred case is arranged on the long side, which is directed towards the room, in the mounted position of the second ejector part 5 to the first ejector part 4. This drainage outlet 12 is arranged to discharge any leaking water from the radiator pipes, out through the enclosure 11, and is arranged at a second distance b from the bottom parts 4a, 5a, which second distance b is shorter than the first distance a, in order to quickly detect water leakage through the drainage outlet 12.

Fig. 4c shows the first seal 7 with, in this case four holes 8, for allowing penetration of radiator pipes. Of course, solutions with two holes or a different number of holes or slots can also occur.

Figs. 4d-e show how the second ejector part 5 is connected to the first ejector part 4, wherein the locking tabs 4c, 5c grip corresponding wall parts 4b, 5b / bottom parts 4a, 5a so that the enclosure 11 is formed. Thereby a lining of the radiator pipes is obtained at the same time as the first seal 7 (not shown in Fig. 4d-e) ensures that no air leaks out via the opening and any gap between the enclosure 11 and the floor surface, but instead is led upwards for heating by passage through the radiator.

Figs. 5a-d show an alternative and simpler embodiment of a lower part of the ventilation device 1, where the first and second ejector parts 4, 5 allow pipe penetration through the bottom parts 4a, 5a of the ventilation device 1 but where a lining for hiding the radiator pipes is missing. The first seal 7 is here instead two seals 7 with holes / guides 8 arranged for pipe penetration. The respective first seals 7 are arranged on respective bottom parts 4a, 5a of the first and second ejector part 4, 5 and the opening 6 is in this case arranged as recesses in respective ejector part 4, 5. This solution also allows the second ejector part 5 to be connected in a removable way to the first ejector part 4 with locking tabs etc.

## Claims

1. A ventilation device (1) arranged for placement between a wall and a radiator arranged next to the wall, wherein the ventilation device (1) is arranged to direct an outdoor air stream from a ventilation opening in the wall to the underside of the radiator, for heating the outdoor air stream before inflow to a room, the ventilation device (1) comprising:
two substantially vertical side pieces (2) arranged at a distance from each other and arranged to prevent outdoor air, which is led through the ventilation device (1), from passing out of the ventilation device (1) at the side pieces (2), wherein the side pieces (2) in the direction between the wall and the radiator have a width (B), and the respective side piece (2) further has an upper end (2a) and a lower end (2b),
at least one top piece (3) which extends between the side pieces (2), preferably between its upper ends (2a), wherein the top piece (3) further is arranged to sealingly connect to the side pieces (2) and arranged to prevent outdoor air, which is led through the ventilation device (1), from passing out of the ventilation device (1) at the top piece (3),
a first ejector part (4) arranged to sealingly connect to the side pieces (2) at its lower ends (2b) and further arranged to prevent outdoor air, which is led through the ventilation device (1), from passing out of the ventilation device (1) at the first ejector part (4), and the first ejector part (4) is arranged to direct an outdoor air stream in the direction away from the wall and in the direction of a lower part of the radiator by means of a first bottom part (4a), wherein the respective side piece (2) is arranged to connect to the wall and to a rear side of the radiator, and wherein the at least one top piece (3) is further arranged to connect to the wall, and wherein the first ejector part (4) is further arranged to connect to the wall, or wherein the ventilation device (1) comprises a rear wall and a front wall which together with the side pieces (2), the top piece (3) and the first ejector part (4) form an air duct for guiding an outdoor air stream from an opening in the wall to the underside of the radiator,
a second ejector part (5), which is connected to the first ejector part (4) and arranged to prevent outdoor air, which is led through the ventilation device (1), from passing out of the ventilation device (1) at the second ejector part (5), and the second ejector part (5) is further arranged to direct an outdoor air stream upwards towards the underside of the radiator by means of a second bottom part (5a),
**characterized in that** the second ejector part is removably connected to the first ejector part, and **in that** at least one of the first bottom part (4a) of the first ejector part (4) and the second bottom part (5a) of the second ejector part (5) comprise an opening (6) which allows the passage of radiator pipes through at least one of the first and the second bottom part (4a, 5a), which radiator pipes extend from a floor side in the direction up towards the radiator.

2. Ventilation device (1) according to claim 1, wherein the ventilation device (1) further comprises at least a first seal (7) arranged at at least one of the first and the second ejector parts (4, 5), which first seal (7) is arranged to prevent air inflow or outflow to / from the ventilation device (1) through the opening (6) in the bottom part (4a, 5a), wherein the first seal (7) comprises at least one slot (8) or hole (8), wherein the slot / the hole (8) is arranged to allow the passage of radiator pipes through the first seal (7), and wherein the first seal (7) is further arranged to seal around radiator pipes extending through the seal (7).

3. Ventilation device (1) according to any of the preceding claims, wherein the first ejector part (4) and the second ejector part (5) comprise downwardly projecting wall parts (4b, 5b) arranged such as the wall parts together form an enclosure (11) around the opening (6) when the first ejector part (4) and the second ejector part (5) are connected to each other, wherein the enclosure (11) is arranged to cover radiator pipes protruding from a floor side.

4. Ventilation device (1) according to claim 3, wherein the first seal (7) is arrangeable in the enclosure (11) and has a width which substantially corresponds to internal dimensions of the enclosure (11), wherein the first seal (7) is arranged to be threaded over radiator pipes protruding from the floor and thereby further arranged to position the ejector parts (4, 5) and thus the ventilation device (1) relative to radiator pipes protruding from a floor side.

5. Ventilation device (1) according to claim 4, wherein the first seal (7) is arrangeable in the enclosure (11) at a first distance (a) from the bottom parts (4a, 5a) and that at least one of the downwardly projecting wall parts (4b, 5b) comprises a drainage outlet (12) arranged to discharge any leaking water from the radiator pipes out through the enclosure (11), which drainage outlet (12) is arranged at a second distance (b) from the bottom parts (4a, 5a), which second distance (b) is shorter than the first distance (a).

6. Ventilation device (1) according to any of the preceding claims, wherein the respective side piece (2) comprises a second seal (9) arranged between the upper end (2a) and the lower end (2b) of the side piece (2) on an inside which faces the other side piece (2), and which second seal (9) has a width slightly wider than the width of the side piece (B), wherein the second seal (9) is arranged to seal against the wall and a rear side of the radiator, respectively.

7. Ventilation device (1) according to any of the preceding claims, wherein the ventilation device (1) further comprises a filter part (15) arranged such as an outdoor air stream is filtered when it is led from a ventilation opening and through the ventilation device (1) towards the underside of the radiator.

8. Ventilation device (1) according to any of claim 3-7, wherein the second ejector part (5) is removably connected to the first ejector part (4) in that at least one of the first and the second ejector parts (4, 5) comprise locking tabs (4c, 5c) arranged to receive and retain corresponding bottom parts (4a, 5a) and / or wall parts (4b, 5b) of the first and the second ejector part (4, 5).

9. Ventilation device (1) according to any of the preceding claims, wherein the respective side piece (2) comprises an upper support part (21a) arranged at the upper end (2a) of the side piece (2) and arranged to support / hold an upper part of the radiator, and a lower support part (21b) arranged at the lower end (2b) of the respective side piece (2) and arranged to support a lower part of the radiator.

10. Ventilation device (1) according to claim 9, wherein at least the first bottom part (4a) of the first ejector part (4) and the second bottom part (5a) of the second ejector part (5) are arranged below the lower support part (21b) of the respective side piece (2).

## Patentansprüche

1. Lüftungsvorrichtung (1), die zum Platzieren zwischen einer Wand und einem neben der Wand angeordneten Heizkörper angeordnet ist, wobei die Lüftungsvorrichtung (1) dazu angeordnet ist, einen Außenluftstrom von einer Lüftungsöffnung in der Wand zur Unterseite des Heizkörpers zu leiten, um den Außenluftstrom vor dem Einströmen in einen Raum zu erwärmen, wobei die Lüftungsvorrichtung (1) Folgendes umfasst:
zwei im Wesentlichen vertikale Seitenteile (2), die voneinander beabstandet angeordnet sind und dazu angeordnet sind, zu verhindern, dass Außenluft, die durch die Lüftungsvorrichtung (1) geleitet wird, an den Seitenteilen (2) aus der Lüftungsvorrichtung (1) austritt, wobei die Seitenteile (2) in die Richtung zwischen der Wand und dem Heizkörper eine Breite (B) aufweisen und das jeweilige Seitenteil (2) ferner ein oberes Ende (2a) und ein unteres Ende (2b) aufweist,
mindestens ein Oberteil (3), das sich zwischen den Seitenteilen (2), vorzugsweise zwischen deren oberen Enden (2a), erstreckt, wobei das Oberteil (3) ferner dazu angeordnet ist, dichtend mit den Seitenteilen (2) verbunden zu sein, und dazu angeordnet ist, zu verhindern, dass Außenluft, die durch die Lüftungsvorrichtung (1) geleitet wird, am Oberteil (3) aus der Lüftungsvorrichtung (1) austritt,
einen ersten Ausstoßteil (4), der dazu angeordnet ist, an deren unteren Enden (2b) dichtend mit den Seitenteilen (2) verbunden zu sein, und ferner dazu angeordnet ist, zu verhindern, dass Außenluft, die durch die Lüftungsvorrichtung (1) geleitet wird, am ersten Ausstoßteil (4) aus der Lüftungsvorrichtung (1) austritt, und wobei der erste Ausstoßteil (4) dazu angeordnet ist, einen Außenluftstrom in die Richtung weg von der Wand und in Richtung eines unteren Teils des Heizkörpers mittels eines ersten Bodenteils (4a) zu leiten, wobei das jeweilige Seitenteil (2) dazu angeordnet ist, mit der Wand und einer Rückseite des Heizkörpers verbunden zu sein, und wobei das mindestens eine Oberteil (3) ferner dazu angeordnet ist, mit der Wand verbunden zu sein, und wobei der erste Ausstoßteil (4) ferner dazu angeordnet ist, mit der Wand verbunden zu sein, oder wobei die Lüftungsvorrichtung (1) eine Rückwand und eine Vorderwand umfasst, die zusammen mit den Seitenteilen (2), dem Oberteil (3) und dem ersten Ausstoßteil (4) einen Luftkanal ausbilden, um einen Außenluftstrom von einer Öffnung in der Wand zur Unterseite des Heizkörpers zu leiten,
einen zweiten Ausstoßteil (5), der mit dem ersten Ausstoßteil (4) verbunden und dazu angeordnet ist, zu verhindern, dass Außenluft, die durch die Lüftungsvorrichtung (1) geleitet wird, am zweiten Ausstoßteil (5) aus der Lüftungsvorrichtung (1) austritt, und wobei der zweite Ausstoßteil (5) ferner dazu angeordnet ist, einen Außenluftstrom mittels eines zweiten Bodenteils (5a) aufwärts zur Unterseite des Heizkörpers zu leiten,
**dadurch gekennzeichnet, dass** der zweite Ausstoßteil abnehmbar mit dem ersten Ausstoßteil verbunden ist, und dadurch, dass der erste Bodenteil (4a) des ersten Ausstoßteils (4) und/oder der zweite Bodenteil (5a) des zweiten Ausstoßteils (5) eine Öffnung (6) umfasst, die das Hindurchführen von Heizrohren durch den ersten und/oder zweiten Bodenteil (4a, 5a) zulässt, wobei sich die Heizrohre von einer Bodenseite in Aufwärtsrichtung zum Heizkörper erstrecken.

2. Lüftungsvorrichtung (1) nach Anspruch 1, wobei die Lüftungsvorrichtung (1) ferner mindestens eine erste Dichtung (7) umfasst, die an dem ersten und/oder zweiten Ausstoßteil (4, 5) angeordnet ist, wobei die erste Dichtung (7) dazu angeordnet ist, das Einströmen oder Ausströmen von Luft in die/von der Lüftungsvorrichtung (1) durch die Öffnung (6) im Bodenteil (4a, 5a) zu verhindern, wobei die erste Dichtung (7) mindestens einen Schlitz (8) oder eine Bohrung (8) umfasst, wobei der Schlitz/die Bohrung (8) dazu angeordnet ist, das Hindurchführen vom Heizrohren durch die erste Dichtung (7) zuzulassen, und wobei die erste Dichtung (7) ferner dazu angeordnet ist, um die sich durch die Dichtung (7) erstreckenden Heizrohre abzudichten.

3. Lüftungsvorrichtung (1) nach einem der vorstehenden Ansprüche, wobei der erste Ausstoßteil (4) und der zweite Ausstoßteil (5) abwärts vorstehende Wandteile (4b, 5b) umfassen, die derart angeordnet sind, dass die Wandteile zusammen ein Gehäuse (11) um die Öffnung (6) auszubilden, wenn der erste Ausstoßteil (4) und der zweite Ausstoßteil (5) miteinander verbunden sind, wobei das Gehäuse (11) dazu angeordnet ist, bodenseitig vorstehende Heizrohre abzudecken.

4. Lüftungsvorrichtung (1) nach Anspruch 3, wobei die erste Dichtung (7) im Gehäuse (11) anordenbar ist und eine Breite aufweist, die im Wesentlichen den Innenabmessungen des Gehäuses (11) entspricht, wobei die erste Dichtung (7) dazu angeordnet ist, über aus dem Boden vorstehende Heizrohre geschraubt zu werden, und dadurch ferner dazu angeordnet ist, die Ausstoßteile (4, 5) und somit die Lüftungsvorrichtung (1) in Bezug zu den bodenseitig vorstehenden Heizrohren zu positionieren.

5. Lüftungsvorrichtung (1) nach Anspruch 4, wobei die erste Dichtung (7) in einer ersten Entfernung (a) von den Bodenteilen (4a, 5a) im Gehäuse (11) anordenbar ist und mindestens einer der abwärts vorstehenden Wandteile (4b, 5b) einen Ablaufauslass (12) umfasst, der dazu angeordnet ist, aus den Heizrohren austretendes Wasser durch das Gehäuse (11) abzulassen, wobei der Ablaufauslass (12) in einer zweiten Entfernung (b) von den Bodenteilen (4a, 5a) angeordnet ist, wobei die zweite Entfernung (b) kürzer ist als die erste Entfernung (a).

6. Lüftungsvorrichtung (1) nach einem der vorstehenden Ansprüche, wobei das jeweilige Seitenteil (2) eine zweite Dichtung (9) umfasst, die zwischen dem oberen Ende (2a) und dem unteren Ende (2b) des zweiten Seitenteils (2) an einer dem anderen Seitenteil (2) zugewandten Innenseite angeordnet ist, und wobei die zweite Dichtung (9) eine etwas breitere Breite als die Breite des Seitenteils (B) aufweist, wobei die zweite Dichtung (9) dazu angeordnet ist, gegen die Wand bzw. eine Rückseite des Heizkörpers abzudichten.

7. Lüftungsvorrichtung (1) nach einem der vorstehenden Ansprüche, wobei die Lüftungsvorrichtung (1) ferner einen Filterteil (15) umfasst, der derart angeordnet ist, dass ein Außenluftstrom gefiltert wird, wenn er von einer Lüftungsöffnung und durch die Lüftungsvorrichtung (1) zur Unterseite des Heizkörpers geleitet wird.

8. Lüftungsvorrichtung (1) nach einem der Ansprüche 3-7, wobei der zweite Ausstoßteil (5) mit dem ersten Ausstoßteil (4) abnehmbar verbunden ist, wobei der erste und/oder zweite Ausstoßteil (4, 5) Verriegelungslaschen (4c, 5c) umfasst, die dazu angeordnet sind, zugehörige Bodenteile (4a, 5a) und/oder Wandteile (4b, 5b) des ersten und zweiten Ausstoßteils (4, 5) aufzunehmen und zu halten.

9. Lüftungsvorrichtung (1) nach einem der vorstehenden Ansprüche, wobei das jeweilige Seitenteil (2) einen oberen Trägerteil (21a), der am oberen Ende (2a) des Seitenteils (2) angeordnet ist und dazu angeordnet ist, einen oberen Teil des Heizkörpers zu tragen/halten, und einen unteren Trägerteil (21b), der am unteren Ende (2b) des jeweiligen Seitenteils (2) angeordnet ist und dazu angeordnet ist, einen unteren Teil des Heizkörpers zu tragen, umfasst.

10. Lüftungsvorrichtung (1) nach Anspruch 9, wobei der erste Bodenteil (4a) des ersten Ausstoßteils (4) und/oder der zweite Bodenteil (5a) des zweiten Ausstoßteils (5) unter dem unteren Trägerteil (21b) des jeweiligen Seitenteils (2) angeordnet ist.

## Revendications

1. Dispositif de ventilation (1) conçu pour être placé entre un mur et un radiateur disposé à côté du mur, le dispositif de ventilation (1) étant conçu pour diriger un flux d'air extérieur provenant d'une ouverture de ventilation dans le mur vers la face inférieure du radiateur, pour chauffer le flux d'air extérieur avant l'entrée dans une pièce, le dispositif de ventilation (1) comprenant :
deux pièces latérales sensiblement verticales (2) disposées à une certaine distance l'une de l'autre et conçues pour empêcher l'air extérieur, qui est acheminé à travers le dispositif de ventilation (1), de passer hors du dispositif de ventilation (1) au niveau des pièces latérales (2), les pièces latérales (2) dans la direction entre le mur et le radiateur ayant une largeur (B), et la pièce latérale (2) respective ayant en outre une extrémité supérieure (2a) et une extrémité inférieure (2b),
au moins une pièce supérieure (3) qui s'étend entre les pièces latérales (2), de préférence entre ses extrémités supérieures (2a), la pièce supérieure (3) étant en outre conçue pour se raccorder de manière étanche aux pièces latérales (2) et pour empêcher l'air extérieur, qui est acheminé à travers le dispositif de ventilation (1), de passer hors du dispositif de ventilation (1) au niveau de la pièce supérieure (3),
une première partie éjecteur (4) conçue pour se raccorder de manière étanche aux pièces latérales (2) au niveau de ses extrémités inférieures (2b) et conçue pour empêcher l'air extérieur, qui est acheminé à travers le dispositif de ventilation (1), de passer hors du dispositif de ventilation (1) au niveau de la première partie éjecteur (4), et la première partie éjecteur (4) étant conçue pour diriger un flux d'air extérieur dans la direction opposée au mur et dans la direction d'une partie inférieure du radiateur au moyen d'une première partie inférieure (4a), la pièce latérale (2) respective étant conçue pour être reliée au mur et à un côté arrière du radiateur, et l'au moins une pièce supérieure (3) étant également conçue pour être reliée au mur, et la première partie éjecteur (4) étant en outre conçue pour être reliée au mur, ou le dispositif de ventilation (1) comprenant une paroi arrière et une paroi avant qui, avec les pièces latérales (2), la pièce supérieure (3) et la première partie éjecteur (4), forment un conduit d'air pour guider un flux d'air extérieur depuis une ouverture dans le mur jusqu'à la face inférieure du radiateur,
une seconde partie éjecteur (5), qui est reliée à la première partie éjecteur (4) et conçue pour empêcher l'air extérieur, qui est acheminé à travers le dispositif de ventilation (1), de passer hors du dispositif de ventilation (1) au niveau de la seconde partie éjecteur (5), et la seconde partie éjecteur (5) étant en outre conçue pour diriger un flux d'air extérieur vers le haut, en direction de la face inférieure du radiateur, au moyen d'une seconde partie inférieure (5a),
**caractérisé en ce que** la seconde partie éjecteur est reliée de manière amovible à la première partie éjecteur, et **en ce que**
au moins une de la première partie inférieure (4a) de la première partie éjecteur (4) et de la seconde partie inférieure (5a) de la seconde partie éjecteur (5) comprend une ouverture (6) qui permet le passage de tuyaux de radiateur à travers au moins une de la première et de la seconde partie inférieure (4a, 5a), lesquels tuyaux de radiateur s'étendent de puis un côté du sol dans la direction vers le radiateur.

2. Dispositif de ventilation (1) selon la revendication 1, le dispositif de ventilation (1) comprenant en outre au moins un premier joint (7) disposé au niveau d'au moins une des première et seconde parties éjecteur (4, 5), lequel premier joint (7) étant conçu pour empêcher l'entrée ou la sortie d'air dans le / du dispositif de ventilation (1) à travers l'ouverture (6) dans la partie inférieure (4a, 5a), le premier joint (7) comprenant au moins une fente (8) ou un trou (8), la fente / le trou (8) étant conçu pour permettre le passage de tuyaux de radiateur à travers le premier joint (7), et le premier joint (7) étant en outre conçu pour assurer l'étanchéité autour des tuyaux de radiateur s'étendant à travers le joint (7).

3. Dispositif de ventilation (1) selon l'une quelconque des revendications précédentes, la première partie éjecteur (4) et la seconde partie éjecteur (5) comprenant des parties de paroi faisant saillie vers le bas (4b, 5b), disposées de sorte que les parties de paroi forment ensemble une enceinte (11) autour de l'ouverture (6) lorsque la première partie éjecteur (4) et la seconde partie éjecteur (5) sont reliées l'une à l'autre, l'enceinte (11) étant conçue pour couvrir les tuyaux de radiateur faisant saillie d'un côté du sol.

4. Dispositif de ventilation (1) selon la revendication 3, le premier joint (7) pouvant être disposé dans l'enceinte (11) et ayant une largeur qui correspond sensiblement aux dimensions internes de l'enceinte (11), le premier joint (7) étant conçu pour être fileté sur des tuyaux de radiateur faisant saillie du sol et ainsi conçu en outre pour positionner les parties éjecteur (4, 5) et ainsi le dispositif de ventilation (1) par rapport aux tuyaux de radiateur faisant saillie d'un côté du sol.

5. Dispositif de ventilation (1) selon la revendication 4, le premier joint (7) pouvant être disposé dans l'enceinte (11) à une première distance (a) des parties inférieures (4a, 5a) et au moins une des parties de paroi faisant saillie vers le bas (4b, 5b) comprenant une sortie de drainage (12) conçue pour évacuer toute fuite d'eau des tuyaux du radiateur à travers l'enceinte (11), laquelle sortie de drainage (12) étant disposée à une seconde distance (b) des parties inférieures (4a, 5a), laquelle seconde distance (b) étant plus courte que la première distance (a).

6. Dispositif de ventilation (1) selon l'une quelconque des revendications précédentes, la pièce latérale (2) respective comprenant un second joint (9) disposé entre l'extrémité supérieure (2a) et l'extrémité inférieure (2b) de la pièce latérale (2) sur une face intérieure qui fait face à l'autre pièce latérale (2), et lequel second joint (9) ayant une largeur légèrement supérieure à la largeur de la pièce latérale (B), le second joint (9) étant conçu pour assurer l'étanchéité contre le mur et un côté arrière du radiateur, respectivement.

7. Dispositif de ventilation (1) selon l'une quelconque des revendications précédentes, le dispositif de ventilation (1) comprenant en outre une partie filtre (15) disposée de sorte qu'un flux d'air extérieur soit filtré lorsqu'il est acheminé depuis une ouverture de ventilation et à travers le dispositif de ventilation (1) vers la face inférieure du radiateur.

8. Dispositif de ventilation (1) selon l'une quelconque des revendications 3 à 7, la seconde partie éjecteur (5) étant reliée de manière amovible à la première partie éjecteur (4) en ce qu'au moins l'une des première et seconde parties éjecteur (4, 5) comprend des languettes de verrouillage (4c, 5c) conçues pour recevoir et retenir les parties inférieures (4a, 5a) et/ou les parties de paroi (4b, 5b) correspondantes des première et seconde parties éjecteur (4, 5).

9. Dispositif de ventilation (1) selon l'une quelconque des revendications précédentes, la pièce latérale (2) respective comprenant une partie de support supérieure (21a) disposée au niveau de l'extrémité supérieure (2a) de la pièce latérale (2) et destinée à supporter / maintenir une partie supérieure du radiateur, et une partie de support inférieure (21b) disposée au niveau de l'extrémité inférieure (2b) de la pièce latérale (2) respective et destinée à supporter une partie inférieure du radiateur.

10. Dispositif de ventilation (1) selon la revendication 9, au moins la première partie inférieure (4a) de la première partie éjecteur (4) et la seconde partie inférieure (5a) de la seconde partie éjecteur (5) étant disposées sous la partie de support inférieure (21b) de la pièce latérale (2) respective.
